# EUROPEAN PATENT SPECIFICATION

(11) **EP 4 287 745 B1**
(45) Date of publication and mention of the grant of the patent: **25.11.2026**
(21) Application number: 22763621.4
(22) Date of filing: 03.03.2022
(51) Int. Cl.: H04W 72/0446, H04W 76/28, H04W 52/02, H04W 28/18, H04W 76/15, H04W 84/12

(54) **MULTI-CONNECTION METHOD AND DEVICE BASED ON TARGET WAKE TIME**
MEHRFACHVERBINDUNGSVERFAHREN UND VORRICHTUNG AUF BASIS EINER ZIELWECKZEIT
DISPOSITIF ET PROCÉDÉ DE CONNEXION MULTIPLE BASÉS SUR UN TEMPS DE RÉVEIL CIBLE

(30) Priority: 03.03.2021 KR 20210028351
(43) Date of publication of application: 06.12.2023
(73) Proprietor: Samsung Electronics Co., Ltd., Suwon-si, Gyeonggi-do 16677 (KR)
(72) Inventor: CHOI, Junsu, Suwon-si, Gyeonggi-do 16677 (KR)
(74) Representative: Gulde & Partner
(86) International application number: PCT/KR2022/003044
(87) International publication number: WO 2022/186640

(56) References cited:
- KR-A- 20140 104 858
- US-A1- 2019 335 454
- US-A1- 2020 221 545
- US-A1- 2020 229 086
- US-A1- 2020 374 801
- US-A1- 2021 007 168

## Description

### Technical Field

Various embodiments of the present disclosure relate to a multi-connection method and device based on a target wake time (TWT).

### Background Art

As wireless local area network (LAN) technology has recently developed, Wireless Fidelity (Wi-Fi) is mounted on various devices and Wi-Fi is available in various places, such as in homes, offices, schools, or on public transportation. Accordingly, many technologies have been introduced to mitigate performance degradation and increase efficiency in an environment in which many Wi-Fi terminals and access points (APs) coexist. Among them, representative technologies include a target wake time (TWT) technology in which a terminal exchanges data with an AP by negotiating a wake time with the AP and a Wi-Fi roaming technology which switches a connection from one AP to another as a terminal moves.

US 2020229086 A1 discloses a computing device comprising at least one processor and a memory performs procedure by executing stored instructions, where the first AP and the second AP are configured to share respective TWT schedules, and the first AP receives data indicative of an 802.11-based TWT schedule of a client of a second BSS from a second AP and identifies a scheduled communication time of the client of the second BSS in the TWT schedule from the received data.

US 2020374801 A1 discloses a communication device comprising a wireless network interface device and one or more integrated circuit devices, where a first communication device negotiates a first TWT agreement with a second communication device and negotiates a second TWT agreement with a second communication device, and the first communication device communicates with the second communication device via the first/second WLAN communication link in accordance with the first/second TWT agreement.

### Disclosure

### Technical Problem

Frequent connection switching or communication interruption may occur when an electronic device (e.g., a Wireless Fidelity (Wi-Fi) terminal) is in a state in which it is difficult to specify which access point (AP) is better to connect to, for example, when the electronic device is not located closer to any one of a plurality of APs. An embodiment of the present disclosure provides a multi-connection method and an electronic device based on a target wake time (TWT) so that a Wi-Fi terminal communicates with a plurality of APs.

### Technical Solution

As a technical means for achieving the technical objective described above, an embodiment of the present disclosure may provide an electronic device for communicating with an access point (AP) based on a target wake time (TWT) of the Institute of Electrical and Electronics Engineers (IEEE) 802.11 standard, the electronic device is provided as defined by the appended set of claims.

An embodiment of the present disclosure may provide an operating method of an electronic device for communicating with an access point (AP) based on a target wake time (TWT) of the Institute of Electrical and Electronics Engineers (IEEE) 802.11 standard, the operating method is provided as defined by the appended set of claims.

### Description of Drawings

FIG. 1 is a conceptual diagram for describing a case where a Wireless Fidelity (Wi-Fi) terminal is located in a gray zone.
FIG. 2 is a conceptual diagram for describing a target wake time (TWT) technology of the Institute of Electrical and Electronics Engineers (IEEE) 802.11 standard.
FIG. 3 is a conceptual diagram for describing an operation by which an electronic device communicates with a plurality of access points (APs), based on a TWT, according to an embodiment of the present disclosure.
FIG. 4 is a block diagram schematically illustrating a configuration of an electronic device that communicates with an AP based on a TWT, according to an embodiment of the present disclosure.
FIG. 5 is a flowchart schematically illustrating a flow of an operating method of an electronic device, according to an embodiment of the present disclosure.
FIG. 6 is a flowchart for describing an operation by which an electronic device performs multi-connection, according to an embodiment of the present disclosure.
FIG. 7 is a conceptual diagram illustrating that an electronic device performs operations of a medium access control (MAC) layer and a physical layer according to each of a plurality of multi-connected APs, according to an embodiment of the present disclosure.
FIG. 8 is a conceptual diagram illustrating an operation by which an electronic device adjusts a wake duration in real time based on a channel state, according to an embodiment of the present disclosure.
FIG. 9 is a diagram illustrating that an electronic device displays a multi-connected state on a screen, according to an embodiment of the present disclosure.
FIG. 10 is a block diagram of an electronic device 801 in a network environment 800, according to various embodiments.

### Mode for Invention

In order to clarify the technical spirit of the present disclosure, embodiments of the present disclosure will be described in detail with reference to the accompanying drawings. In describing the present disclosure, when a detailed description of the relevant known functions or elements is determined to unnecessarily obscure the gist of the present disclosure, the detailed description thereof may be omitted. Elements having substantially the same functional configuration in the drawings are denoted by the same reference numerals and reference symbols as much as possible, even though illustrated in different drawings. For convenience of description, a device and a method are described together when necessary. Each operation of the present disclosure need not necessarily be performed in the aforementioned order, and may be performed in parallel, selectively, or separately.

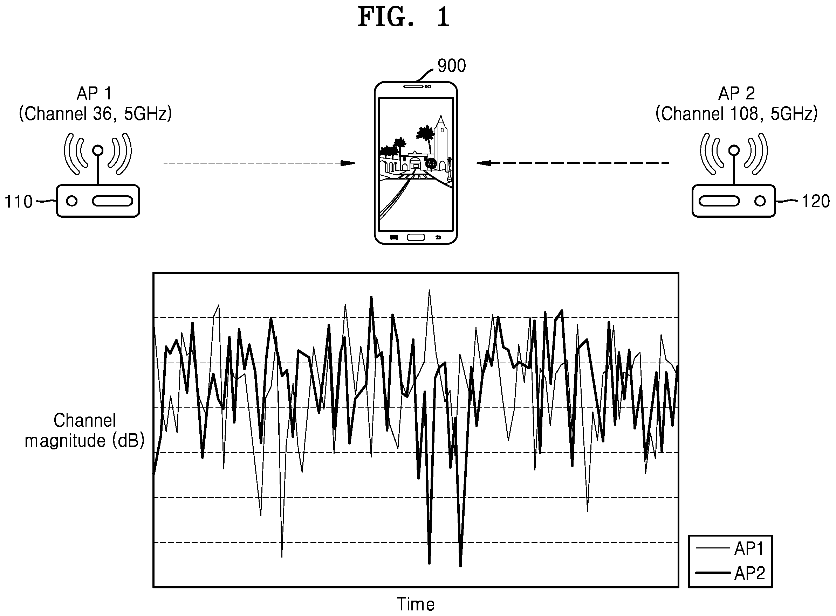

FIG. 1 is a conceptual diagram for describing a case where a Wireless Fidelity (Wi-Fi) terminal is located in a gray zone.

Referring to FIG. 1, because a Wi-Fi terminal 900 is not located closer to any one of a first access point (AP) 110 and a second AP 120, the Wi-Fi terminal 900 may be in a state in which it is difficult to specify which AP is better to connect to. This state may occur when the Wi-Fi terminal 900 is located close to one AP and then moves to another AP to perform roaming.

In this case, even when average received signal strength indications (RSSIs) from two APs are similar to each other, the Wi-Fi terminal 900 may experience fluctuations in the RSSIs from the two APs due to small-scale fading caused by a multipath signal. Accordingly, when connection switching is performed to an AP having a higher received signal among the two APs based on the RSSI, excessively frequent connection switching may occur.

In order to reduce overhead caused by frequent connection switching, a method of performing no connection switching for a certain time after a connection is established once may be taken into account. However, in this case, communication may be interrupted when the RSSI from the currently connected AP is attenuated to such an extent that communication is impossible.

In order to prevent frequent connection switching and communication interruption, a method by which the Wi-Fi terminal 900 is simultaneously connected to two APs may be taken into account. However, because existing Wi-Fi operates in accordance with a random access scheme called carrier sense multiple access with collision avoidance (CSMA/CA), it may not be suitable that one terminal is simultaneously connected to a plurality of APs.

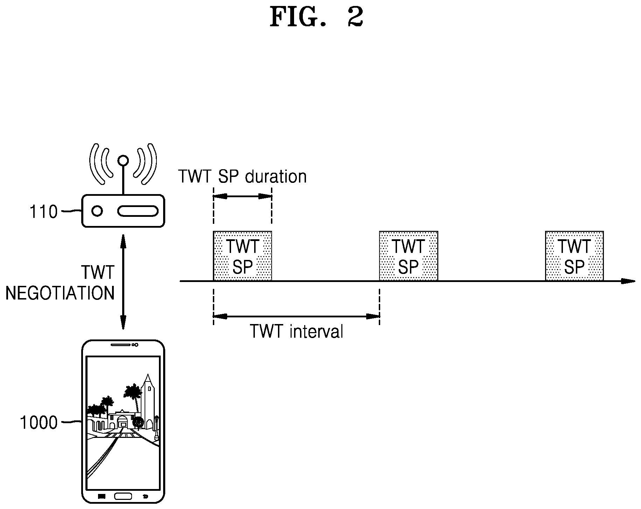

FIG. 2 is a conceptual diagram for describing a target wake time (TWT) technology of the Institute of Electrical and Electronics Engineers (IEEE) 802.11 standard. IEEE 802.11ax introduces several technologies that increase the efficiency of Wi-Fi networks, and a representative example thereof is a TWT technology.

Referring to FIG. 2, a Wi-Fi terminal 1000 may determine a TWT schedule by performing TWT negotiation with an AP 110. The TWT schedule may include information about a time at which the Wi-Fi terminal 1000 exchanges data (e.g., a medium access control (MAC) frame) with the AP, which is determined through TWT negotiation. The TWT schedule may include a first wake time, a wake interval, and/or a wake duration. The first wake time may be a TWT among parameters in TWT negotiation. The wake interval may be determined by a TWT wake interval mantissa and a TWT wake interval exponent among parameters in TWT negotiation. The wake duration may be a nominal minimum TWT wake duration among parameters in TWT negotiation. The TWT schedule may refer to a TWT agreement.

The Wi-Fi terminal 1000 may be in a doze state (low power state) in a doze period according to the TWT schedule and may then wake up in a service period (SP) according to the TWT schedule to exchange data with the AP. The AP may adjust the SP by using fields such as an end of service period (EOSP), more data, or more trigger, but the SP may be basically defined by the first wake time, the wake interval, and the wake duration. Various embodiments of the present disclosure propose a method and a device for enabling a Wi-Fi terminal to communicate with a plurality of APs based on the TWT of IEEE 802.11.

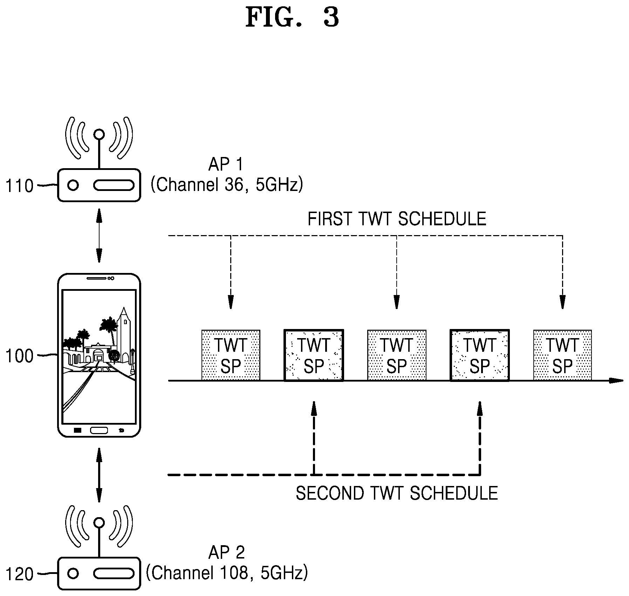

FIG. 3 is a conceptual diagram for describing an operation by which an electronic device communicates with a plurality of APs based on a TWT, according to an embodiment of the present disclosure.

Referring to FIG. 3, an electronic device 100 according to an embodiment of the present disclosure may determine a first TWT schedule by performing TWT negotiation with a first AP 110, and may perform communication with the first AP 110 based on the first TWT schedule. The electronic device 100 may exchange data with the first AP 110 within an SP according to the first TWT schedule. For example, the electronic device 100 may be a Wi-Fi terminal and may communicate with the first AP 110 by using channel 36 of a 5 GHz band.

In addition, the electronic device 100 may determine a second TWT schedule by performing TWT negotiation with a second simultaneously maintaining communication with a plurality of APs without multiple access collision AP 120 and may perform communication with the second AP 120 based on the second TWT schedule. The electronic device 100 may exchange data with the second AP 120 within an SP according to the second TWT schedule. For example, the electronic device 100 may communicate with the second AP 120 by using channel 108 of a 5 GHz band. As illustrated in FIG. 3, the SP according to the first TWT schedule may not overlap the SP according to the second TWT schedule. For example, the electronic device 100 may exchange data with the first AP 110 and the second AP 120 at different times. As such, the electronic device 100 may simultaneously communicate with a plurality of APs by exchanging data with the APs at different times based on a plurality of TWT schedules.

The expression "simultaneously communicating with a plurality of APs" does not mean simultaneously exchanging data with a plurality of APs, as may be seen from the above description. The expression "simultaneously communicating with a plurality of APs" may mean performing communication with another AP based on another TWT schedule while communicating with one AP based on a certain TWT schedule.

The expression "simultaneously communicating with a plurality of APs" may mean exchanging data with another AP in the time between SPs for one AP. The expression "simultaneously communicating with a plurality of APs" may mean exchanging data with another AP in the doze period for one AP. At this time, because the electronic device 100 exchanges data with another AP in the doze period for one AP, the doze period does not mean a period in which the electronic device 100 actually enters the doze state (low power state), but may mean a period in which the electronic device 100 is scheduled to be in the doze state according to the TWT schedule. The doze period may mean a time other than the SP.

The expression "simultaneously communicating with a plurality of APs" may mean that the electronic device 100 is simultaneously connected to a plurality of APs. The expression "the electronic device 100 is connected to the AP" may mean that the electronic device 100 establishes a connection with the AP through an association procedure. For example, while the electronic device 100 communicates with the first AP 110 according to the first TWT schedule in a state of being connected to the first AP 110, the electronic device 100 may be connected to the second AP 120 and communicate with the second AP 120 according to the second TWT schedule.

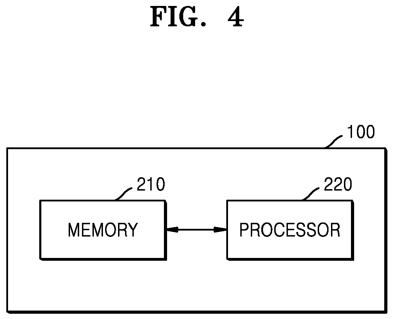

FIG. 4 is a block diagram schematically illustrating a configuration of an electronic device that communicates with an AP based on a TWT, according to an embodiment of the present disclosure.

Referring to FIG. 4, an electronic device 100 according to an embodiment of the present disclosure may include a processor 210 and a memory 220 that stores one or more instructions executable by the processor 210.

The processor 210 may be implemented with one or more processors. The memory 220 may be one or more memories. The electronic device 100 is a device having a Wi-Fi function, and may be a mobile device, such as a smartphone, a tablet, or a laptop computer, a fixed device, such as a desktop computer or a closed circuit television (CCTV), or a part thereof.

A processor (e.g., the processor 210) of an electronic device (e.g., the electronic device 100) according to an embodiment of the present disclosure may execute one or more instructions stored in a memory (e.g., the memory 220) to determine a first TWT schedule by performing TWT negotiation with a first AP (e.g., the AP 110), determine a second TWT schedule by performing TWT negotiation with a second AP (e.g., the AP 120), and communicate with the second AP based on the second TWT schedule while communicating with the first AP based on the first TWT schedule. The meaning of the expression "communicating with the second AP while communicating with the first AP" is the same as described above with reference to FIG. 3. For example, the processor 210 may simultaneously communicate with the first AP 110 and the second AP 120 according to different TWT schedules. As described above, the operation of determining the first TWT schedule, the operation of determining the second TWT schedule, and the operation of communicating with the second AP 120 while communicating with the first AP 110 need not necessarily be performed in the aforementioned order.

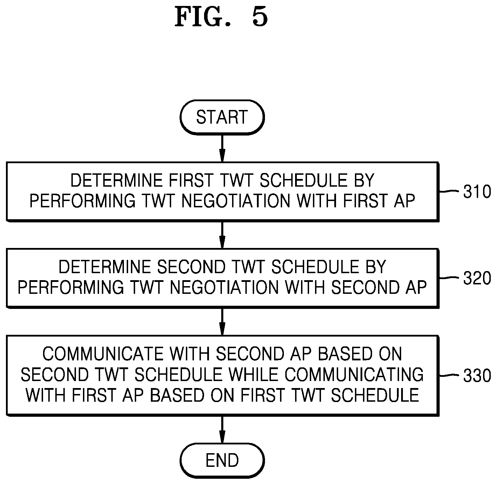

FIG. 5 is a flowchart schematically illustrating a flow of an operating method of an electronic device, according to an embodiment of the present disclosure. All operations of the electronic device 100 described below, including the description of FIG. 5, may be operations that are performed by the processor 210 executing one or more instructions stored in the memory 220.

Referring to FIG. 5, in operation 310, the electronic device 100 may determine the first TWT schedule by performing TWT negotiation with the first AP 110. In operation 320, the electronic device 100 may determine the second TWT schedule by performing TWT negotiation with the second AP 120. In operation 330, the electronic device 100 may communicate with the second AP 120 based on the second TWT schedule while communicating with the first AP 110 based on the first TWT schedule. The meaning of the expression "communicating with the second AP 120 while communicating with the first AP 110" is the same as described above with respect to FIG. 3. For example, the electronic device 100 may simultaneously communicate with the first AP 110 and the second AP 120 according to different TWT schedules. As described above, operations 310 to 330 need not be necessarily performed in the aforementioned order. For example, the electronic device 100 may perform operation 320 of determining the second TWT schedule with the second AP 120, and then, may perform operation 310 of determining the first TWT schedule with the first AP 110.

The operating method of the electronic device (e.g., the electronic device 100) according to an embodiment of the present disclosure may include determining the first TWT schedule by performing TWT negotiation with the first AP (e.g., the AP 110), determining the second TWT schedule by performing TWT negotiation with the second AP (e.g., the AP 120), and communicating with the second AP based on the second TWT schedule while communicating with the first AP based on the first TWT schedule.

In the operating method of the electronic device (e.g., the electronic device 100) according to an embodiment of the present disclosure, the determining of the second TWT schedule by performing TWT negotiation with the second AP (e.g., the AP 120) may include performing TWT negotiation with the second AP (e.g., the AP 120) based on the first TWT schedule.

In the operating method of the electronic device (e.g., the electronic device 100) according to an embodiment of the present disclosure, the determining of the second TWT schedule by performing TWT negotiation with the second AP (e.g., the AP 120) may include determining the second TWT schedule so that the SP according to the first TWT schedule does not overlap the SP according to the second TWT schedule.

The operating method of the electronic device (e.g., the electronic device 100) according to an embodiment of the present disclosure may further include adjusting at least one of the first TWT schedule and the second TWT schedule by performing TWT negotiation with at least one of the first AP (e.g., the AP 110) and the second AP (e.g., the AP 120) based on the channel state for the first AP (e.g., the AP 110) and the channel state for the second AP (e.g., the AP 120).

The operating method of the electronic device (e.g., the electronic device 100) according to an embodiment of the present disclosure may further include connecting to the second AP (e.g., the AP 120) while maintaining a state of being connected to the first AP (e.g., the AP 110).

When performing TWT negotiation with the second AP (e.g., the AP 120), the electronic device (e.g., the electronic device 100) according to an embodiment of the present disclosure may perform negotiation based on the first TWT schedule. For example, the electronic device 100 may determine the first TWT schedule by performing TWT negotiation with the first AP 110, and then, may perform TWT negotiation with the second AP 120 by taking into account the determined first TWT schedule. In this manner, the electronic device (e.g., the electronic device 100) may determine the second TWT schedule so that the SP according to the first TWT schedule does not overlap the SP according to the second TWT schedule.

The electronic device (e.g., the electronic device 100) may set an interval between the SP according to the first TWT schedule and the SP according to the second TWT schedule. For example, the electronic device (e.g., the electronic device 100) may determine the second TWT schedule so that a time interval equal to or longer than a specified time is set between the SP according to the first TWT schedule and the SP according to the second TWT schedule. In this manner, interference between the communication with the first AP 110 and the communication with the second AP 120 may be reduced.

The electronic device (e.g., the electronic device 100) may connect to the second AP (e.g., the AP 120) while maintaining a state of being connected to the first AP (e.g., the AP 110). The electronic device 100 may perform TWT negotiation with the AP in a procedure for connecting to the AP, for example, in an association procedure, or may perform TWT negotiation after connecting to the AP. In a state of being connected to the first AP 110, the electronic device 100 may perform TWT negotiation with the second AP 120 by taking into account the first TWT schedule while connecting to the second AP 120. After connecting to the second AP 120 in a state of being connected to the first AP 110, the electronic device 100 may perform TWT negotiation with the second AP 120 by taking into account the first TWT schedule. Hereinafter, the connection of the electronic device 100 to one AP is referred to as single connection, and the connection of the electronic device 100 to a plurality of APs is referred to as multi-connection.

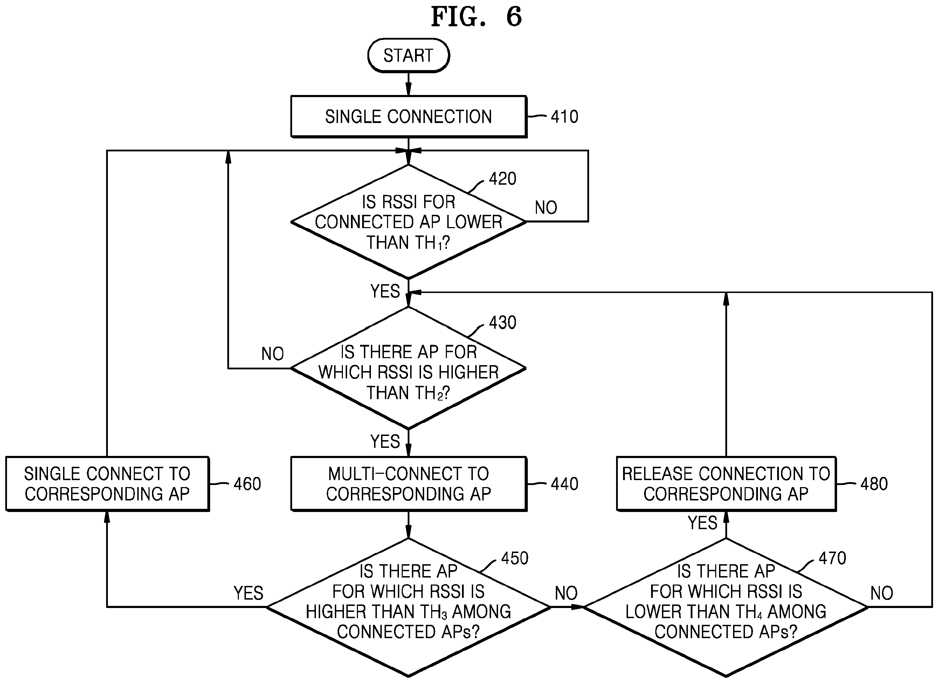

FIG. 6 is a flowchart for describing an operation by which an electronic device performs multi-connection, according to an embodiment of the present disclosure.

Referring to FIG. 6, in operation 410, the electronic device 100 may establish single connection by connecting to one AP. For example, the electronic device 100 may be single-connected to the first AP 110.

The electronic device (e.g., the electronic device 100) according to an embodiment of the present disclosure attempts multi-connection in a state of being single-connected to the first AP (e.g., the AP 110) when RSSI for the first AP is low according to a specified criterion. According to an embodiment, in operation 420, the electronic device 100 may determine whether RSSI for the single-connected AP is low according to a first specified criterion. The electronic device 100 may attempt multi-connection when the RSSI for the single-connected AP is low according to the first specified criterion.

The state in which the RSSI for the single-connected AP is low according to the first specified criterion may be, for example, a state in which RSSI for the AP is lower than a first specified threshold value Th1. According to an embodiment, the RSSI for the AP may be a value measured for a specified time. For example, the RSSI for the AP may be an average value for a specified time. The specified time may be set to be sufficiently longer than a period of small-scale fading in a typical Wi-Fi usage environment.

As another example, the state in which the RSSI for the single-connected AP is low according to the first specified criterion may be a state in which the RSSI for the AP is kept lower than the first specified threshold value for a specified time or longer. The specified time may be set to be sufficiently longer than a period of small-scale fading in a typical Wi-Fi usage environment.

According to an embodiment, the electronic device 100 attempts multi-connection when the RSSI for the single-connected AP is low according to a first criterion. For example, attempting multi-connection may be searching for an AP suitable for multi-connection. The electronic device 100 may search for an AP suitable for multi-connection in a period other than an SP according to a TWT schedule with respect to the currently connected AP (for example, the single-connected AP (e.g., the first AP 110)). The electronic device 100 may search for an AP suitable for multi-connection in a doze period according to the TWT schedule with respect to the currently connected AP (e.g., the first AP 110). When the electronic device 100 does not exchange data with the currently connected AP (e.g., the first AP 110) in the SP according to the TWT schedule with respect to the currently connected AP, the electronic device 100 may search for an AP suitable for multi-connection.

The AP suitable for multi-connection may be an AP (e.g., the second AP 120), for which the RSSI is high according to a second specified criterion. For example, in operation 430, the electronic device 100 may determine whether there is an AP suitable for multi-connection, for which the RSSI is high according to the second specified criterion. The state in which the RSSI for the AP suitable for multi-connection is high according to the second specified criterion may be, for example, a state in which the RSSI for the AP is higher than a second specified threshold value Th2. As another example, the state in which the RSSI for the AP suitable for multi-connection is high according to the second specified criterion may be a state in which the RSSI for the AP is kept higher than the second specified threshold value for a specified time or longer. According to an embodiment, the second threshold value may be less than the first threshold value. For example, the first threshold value may be a criterion for determining whether the electronic device 100 operates with single connection or with multi-connection, and the second threshold value may be a criterion for selecting APs that are multi-connection candidates when the electronic device 100 operates with multi-connection.

In a state of being single-connected to the first AP (e.g., the AP 110), when the AP (e.g., the AP 120) is found in which the RSSI for the first AP is low according to the first specified criterion and is high according to the second specified criterion, the electronic device (e.g., the electronic device 100) according to an embodiment of the present disclosure may switch to a multi-connected state by connecting to the found AP. For example, in operation 440, when the AP (e.g., the second AP 120) suitable for multi-connection is found, the electronic device 100 may connect to the corresponding AP. In a state of being single-connected to one AP (e.g., the first AP 110), when the AP is found in which the RSSI for the single-connected AP is low according to the first specified criterion and is high according to the second specified criterion, the electronic device 100 may switch to a multi-connected state by connecting to the corresponding AP. For example, in a state of being single-connected to the first AP 110, when the RSSI for the first AP 110 is low according to the first specified criterion and the RSSI for the second AP 120 is high according to the second specified criterion, the electronic device 100 may switch to a multi-connected state by connecting to the second AP 120 while maintaining the connection to the first AP 110. As described above, when connecting to a new AP (e.g., the second AP 120), the electronic device 100 may perform TWT negotiation with the newly connected AP (e.g., the second AP 120) by taking into account the TWT schedule of the currently single-connected AP (e.g., the first AP 110).

When a plurality of APs suitable for multi-connection are found, the electronic device 100 may be connected to an AP having the highest RSSI among the found APs. The electronic device 100 may be connected to a plurality of APs among the found APs. The electronic device 100 may be connected to all the found APs. For example, the electronic device 100 may be sequentially connected to the APs. According to an embodiment, the electronic device 100 may be multi-connected to up to the specified number of APs. For example, when the electronic device 100 is multi-connected to up to the specified number of APs, the electronic device 100 may be connected to the currently connected AP and the APs in the descending order of the RSSI. As another example, when the electronic device 100 is multi-connected to up to the specified number of APs, the electronic device 100 may be connected to the APs in the descending order of the RSSI.

When the electronic device 100 is connected to a new AP in a state of being connected to a plurality of APs, the electronic device 100 may perform TWT negotiation with the new AP by taking into account the TWT schedules of the currently connected APs. The processor may perform TWT negotiation so that the TWT SPs of all the multi-connected APs do not overlap each other.

In a state of being multi-connected to a plurality of APs, when the RSSI for any one of the multi-connected APs is high according to the specified criterion, the electronic device (e.g., the electronic device 100) according to an embodiment of the present disclosure may switch to a state of being single-connected to the corresponding AP. For example, when the RSSI for any one of a plurality of multi-connected APs is high according to a third specified criterion, the electronic device 100 may switch to a state of being single-connected to the corresponding AP. In operation 450, the electronic device 100 may determine whether there is an AP for which the RSSI is high according to the third specified criterion among the multi-connected APs. In operation 460, when there is such an AP, the electronic device 100 may switch to a state of being single-connected to the corresponding AP. Switching to the state of being single-connected to the corresponding AP may be releasing the connection to the remaining AP(s). For example, in a state of being multi-connected to the first AP 110 and the second AP 120, when the RSSI for the second AP 120 is high according to the third specified criterion, the electronic device 100 may release the connection to the first AP 110 and switch to a state of being single-connected to the second AP 120.

The state in which the RSSI for the AP is high according to the third specified criterion may be, for example, a state in which the RSSI for the AP is higher than a third specified threshold value Th3. The third specified threshold value may be equal to the first specified threshold value. According to another embodiment, frequent switching between single connection and multi-connection may be prevented by setting the third specified threshold value to a value higher than the first specified threshold value.

As another example, the state in which the RSSI for the AP is high according to the third specified criterion may be a state in which the RSSI for the AP is kept higher than the third specified threshold value for a specified time or longer. In this case, even when the third specified threshold value is equal to the first specified threshold value, frequent switching between single connection and multi-connection may be prevented.

When there are a plurality of APs for which the RSSI is high according to the third specified criterion, the electronic device 100 may switch to a state of being single-connected to one of the APs. The electronic device 100 may switch to a state of being single-connected to an AP having the highest RSSI among the APs.

In a state of being multi-connected to a plurality of APs, when the RSSI for any one of the multi-connected APs is low according to a specified criterion, the electronic device (e.g., the electronic device 100) according to an embodiment of the present disclosure may release the connection to the corresponding AP. For example, when the RSSI for any one of a plurality of multi-connected APs is low according to a fourth specified criterion, the electronic device 100 may release the connection to the corresponding AP. In operation 470, the electronic device 100 may determine whether there is an AP for which the RSSI is low according to the fourth specified criterion among the multi-connected APs. In operation 480, when there is such an AP, the electronic device 100 may release the connection to the corresponding AP. After the release of the connection, when a plurality of connected APs remain, the multi-connected state may be maintained, and when only one connected AP remains, the state may be switched to a single connected state. For example, in a state of being multi-connected to the first AP 110 and the second AP 120, when the RSSI for the first AP 110 is low according to the fourth specified criterion, the electronic device 100 may release the connection to the first AP 110 and switch to a state of being single-connected to the second AP 120.

The state in which the RSSI for the AP is low according to the fourth specified criterion may be, for example, a state in which the RSSI for the AP is lower than a fourth specified threshold value Th4. The fourth specified threshold value may be equal to the second specified threshold value. According to an embodiment, frequent connection and disconnection for one AP may be prevented by setting the fourth specified threshold value to a value lower than the second specified threshold value.

As another example, the state in which the RSSI for the AP is low according to the fourth specified criterion may be a state in which the RSSI for the AP is kept lower than the fourth specified threshold value for a specified time or longer. In this case, even when the fourth specified threshold value is equal to the second specified threshold value, frequent connection and disconnection for one AP may be prevented.

According to an embodiment, the electronic device 100 may perform additional connection by searching for an AP suitable for multi-connection even in a multi-connected state. For example, the electronic device 100 may perform operation 430 even in a multi-connected state. According to an embodiment, the electronic device 100 may perform AP search for the currently connected APs in a period other than the SP according to the TWT schedule. According to an embodiment, the electronic device 100 may perform AP search for all the currently connected APs in a doze period according to the TWT schedule. According to an embodiment, the electronic device 100 may perform AP search when not exchanging data with any of the currently connected APs.

The flowchart of FIG. 6 is only an example, and operations 410 to 480 described above need not necessarily be performed in the order illustrated in FIG. 6. For example, when the state is switched to the single connected state after the release of the connection in operation 480, the electronic device 100 may perform operation 420. According to an embodiment, the specified threshold values and the specified times described above may be values fixed when the electronic device 100 is manufactured. According to an embodiment, the specified thresholds and/or the specified times may be adjusted by learning. According to an embodiment, the specified threshold values and the specified times may be values set by a user.

According to an embodiment, in order to communicate with a plurality of APs, the electronic device 100 has to perform a communication function according to each of the APs. For example, when the electronic device 100 exchanges data with the first AP 110, each communication layer of the electronic device 100 has to perform a function corresponding to each communication layer of the first AP 110, and when the electronic device 100 exchanges data with the second AP 120, each communication layer of the electronic device 100 has to perform a function corresponding to each communication layer of the second AP 120. According to an embodiment, the electronic device 100 may change the operation of each communication layer according to the counterpart AP that currently exchanges data.

In an embodiment, when multi-connected APs are all connected to the same gateway, the electronic device 100 only needs to change an operation of a physical layer and an operation of a MAC layer according to the AP, and does not need to change an operation of a layer higher than the MAC layer (hereinafter referred to as an "upper layer"). For example, in most roaming networks today, APs in the roaming network are connected to a common gateway, and thus, connection switching between APs is performed without IP renewal. Therefore, the electronic device 100 may perform multi-connection in the roaming network even when only the operations of the physical layer and the MAC layer are changed according to the AP.

According to an embodiment, the electronic device 100 may perform the operations of the MAC layer and the physical layer according to the counterpart AP that currently exchanges data among the multi-connected APs, and the operation of the upper layer may be performed in the same manner regardless of the counterpart AP. Performing the operations of the MAC layer and the physical layer according to the counterpart AP may mean performing operations corresponding to the operations of the MAC layer and the physical layer of the counterpart AP. Performing the operation of the upper layer in the same manner regardless of the counterpart AP may mean performing the same communication function regardless of with which AP data is to be exchanged. Performing the operation of the upper layer in the same manner may include using the same IP address and the same transmission control protocol/user datagram protocol (TCP/UDP) port.

For example, when the electronic device (e.g., the electronic device 100) performs communication based on the first TWT schedule, the electronic device (e.g., the electronic device 100) may perform the operations of the MAC layer and the physical layer according to the first AP (e.g., the AP 110) , and when the electronic device (e.g., the electronic device 100) performs communication based on the second TWT schedule, the electronic device (e.g., the electronic device 100) may perform the operations of the MAC layer and the physical layer according to the second AP (e.g., the AP 120). When the electronic device (e.g., the electronic device 100) performs communication based on the first TWT schedule, the electronic device (e.g., the electronic device 100) may perform the operation of the upper layer in the same manner as when the electronic device (e.g., the electronic device 100) performs communication based on the second TWT schedule.

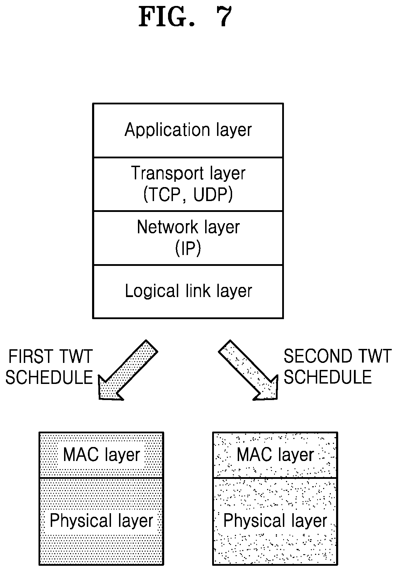

This operation may be understood as the same concept as having a separate MAC layer and a separate physical layer for each multi-connected AP and switching to the corresponding MAC layer and the corresponding physical layer according to the TWT schedule, as illustrated in FIG. 7.

In this manner, in order to change only the operations of the MAC layer and the physical layer in a state of being multi-connected to a plurality of APs, when performing multi-connection to a new AP, the electronic device 100 may identify whether the corresponding AP is an AP connected to the same gateway as the previously connected AP(s). For example, after the electronic device 100 is connected to the new AP, the electronic device 100 may determine whether the corresponding AP is connected to the same gateway as the previously connected AP(s). When the corresponding AP is not connected to the same gateway as the previously connected AP(s), the electronic device 100 may release the connection to the corresponding AP. In order to determine whether the APs are connected to the same gateway, the electronic device 100 may identify a MAC address of the gateway to which the APs are connected. After the electronic device (e.g., the electronic device 100) is connected to the second AP (e.g., the AP 120) in a state of being connected to first AP (e.g., the AP 110), the electronic device (e.g., the electronic device 100) according to an embodiment of the present disclosure may transmit an address resolution protocol (ARP) request to the second AP by using an IP address of the gateway of the first AP, may determine whether a MAC address of a response to the ARP request is identical to the MAC address of the gateway, and may release the connection to the second AP when the MAC address of the response is different from the MAC address of the gateway. For example, after the electronic device 100 is connected to the second AP 120 in a state of being connected to the first AP 110, the electronic device 100 may transmit an ARP request to the second AP 120 by using the IP address of the gateway of the first AP 110, and may determine whether the MAC address of the response to the ARP request is identical to the MAC address of the gateway of the first AP 110. When the MAC address of the response to the ARP request is not identical to the MAC address of the gateway of the first AP 110, the electronic device 100 may release the connection to the second AP.

According to an embodiment, when the electronic device 100 performs multi-connection to the APs, the electronic device 100 may perform TWT negotiation by taking into account a channel state. For example, the channel state may include RSSI, signal-to-noise ratio (SNR), and/or throughput for each AP. The TWT negotiation performed by taking into account the channel state may be performed in order to determine a TWT schedule when the electronic device 100 is connected to a new AP, and may be performed in order to adjust a TWT schedule for an already connected AP. According to an embodiment, the electronic device 100 may adjust a TWT schedule in real time according to a current channel state. The adjustment of the TWT schedule may be performed periodically or may be performed when the adjustment is necessary according to the channel state.

The electronic device (e.g., the electronic device 100) according to an embodiment of the present disclosure may adjust at least one of the first TWT schedule and the second TWT schedule by performing TWT negotiation with at least one of the first AP and the second AP based on the channel state for the first AP (e.g., the AP 110) and the channel state for the second AP (e.g., the AP 120). The electronic device (e.g., the electronic device 100) may perform the adjustment in a state of being multi-connected to the first AP and the second AP.

The electronic device (e.g., the electronic device 100) may allocate a longer wake duration to an AP having a good channel state. For example, the electronic device (e.g., the electronic device 100) may perform the adjustment so that a wake duration of an AP having a better channel state among the first AP (e.g., the AP 110) and the second AP (e.g., the AP 120) is longer than a wake duration of an AP having a worse channel state among the first AP and the second AP.

For example, the electronic device 100 may allocate the wake duration to each AP in proportion to expected throughput obtained by multiplying a link speed of each AP by a normal packet transmission rate (a transmission rate excluding retransmission). The link speed of each AP may be obtained according to settings of a modulation and coding scheme (MCS), a spatial stream, and/or a bandwidth for connection to each AP.

As another example, the electronic device 100 may allocate the wake duration of each AP according to the following equation.${D}_{i} = I \times \frac{{log}_{2} \left(1+{SNR}_{i}\right)}{{\sum }_{i} {log}_{2} \left(1+{SNR}_{i}\right)}$

Di is a wake duration of an ith AP, I is a wake interval, and SNRi is an SNR of the ith AP.

In an embodiment, the wake interval may be set to be sufficiently shorter than a cycle of small-scale fading in a typical Wi-Fi usage environment. The electronic device 100 may adjust the wake interval according to the channel state. For example, the electronic device 100 may adjust the wake interval to be shorter than the current cycle of small-scale fading.

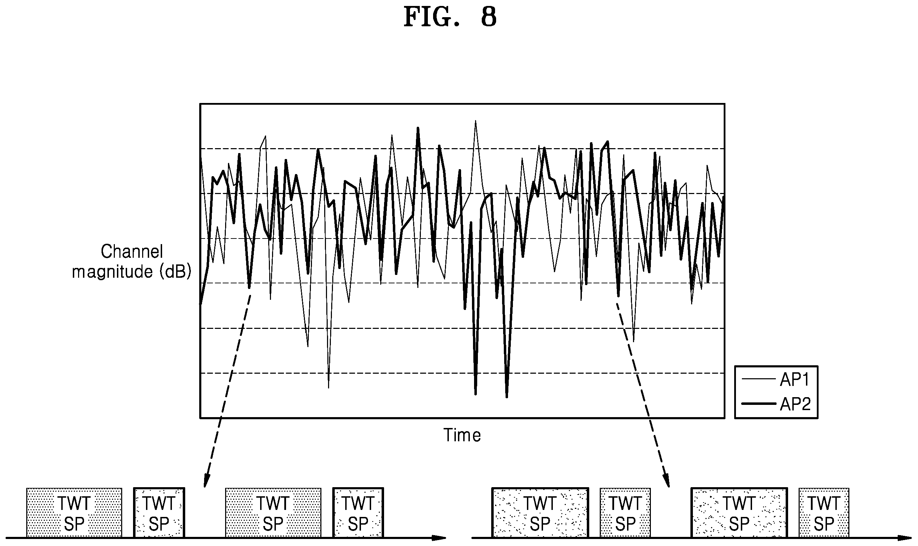

FIG. 8 is a conceptual diagram illustrating an operation by which an electronic device adjusts a wake duration in real time based on a channel state, according to an embodiment of the present disclosure. For example, in the electronic device 100, the SNR for the first AP (e.g., the AP 110) may be higher than the SNR for the second AP (e.g., the AP 120) in a first time interval, and the SNR for the second AP may be higher than the SNR for the first AP in a second time period. The electronic device 100 according to an embodiment may set a longer wake duration for an AP having a higher SNR. For example, the wake duration for the first AP (e.g., the AP 110) may be set to be longer than the wake duration for the second AP (e.g., the AP 120) in the first time interval, and the wake duration for the second AP may be set to be longer than the wake duration for the first AP in the second time interval.

In an embodiment, a user may select whether to permit multi-connection to a plurality of APs. For example, the electronic device 100 may receive a selection input of selecting whether to permit multi-connection from a user through a menu on a screen, and may perform multi-connection based on the selection input.

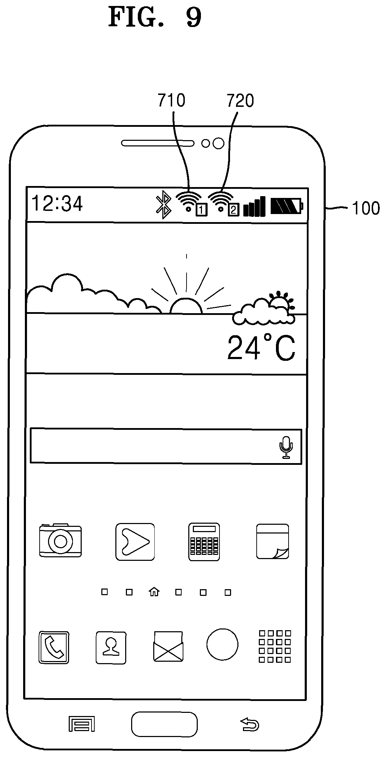

The electronic device (e.g., the electronic device 100) according to an embodiment of the present disclosure may notify a user of a multi-connected state. The electronic device (e.g., the electronic device 100) may display, on the display, a connection state with the first AP (e.g., the AP 110) and a connection state with the second AP (e.g., the AP 120). For example, as illustrated in FIG. 9, the electronic device 100 may display a connection state 710 with the first AP 110 and a connection state 720 with the second AP 120 in a form of a status bar on the screen. In this case, displaying the connection state may simply indicate that a plurality of APs are connected, or may indicate RSSI for each connected AP. According to an embodiment, the electronic device 100 may provide, to the user, a screen for setting the multi-connected state. For example, the user may set conditions (e.g., signal strength) for performing multi-connection with a plurality of APs. As another example, when the electronic device 100 is in the multi-connected state, the electronic device 100 may perform single connection based on a selection of a user.

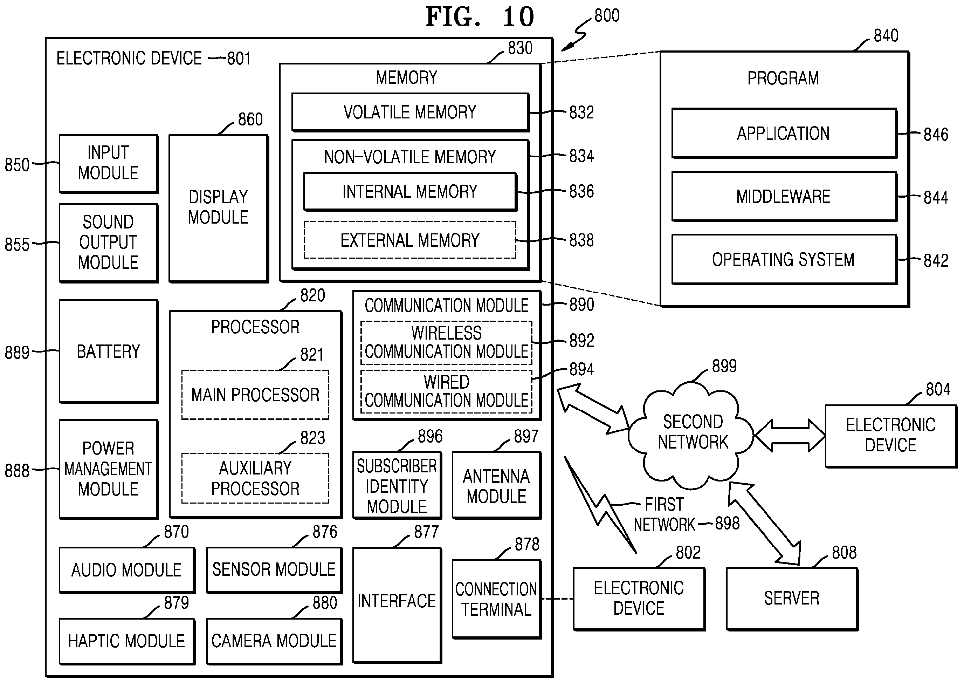

FIG. 10 is a block diagram of an electronic device 801 in a network environment 800, according to various embodiments.

Referring to FIG. 10, the electronic device 801 in the network environment 800 may communicate with an electronic device 802 via a first network 898 (e.g., a short-range wireless communication network), or may communicate with at least one of an electronic device 804 or a server 808 via a second network 899 (e.g., a long-range wireless communication network). According to an embodiment, the electronic device 801 may communicate with the electronic device 804 through the server 808. The electronic device 801 may be the electronic device 100.

According to an embodiment, the electronic device 801 may include a processor 820 (e.g., the processor 220), a memory 830 (e.g., the memory 210), an input module 850, a sound output module 855, a display module 860, an audio module 870, a sensor module 876, an interface 877, a connection terminal 878, a haptic module 879, a camera module 880, a power management module 888, a battery 889, a communication module 890, a subscriber identity module 896, or an antenna module 897. In some embodiments, at least one of these elements (e.g., the connection terminal 878) may be omitted in the electronic device 801, or one or more other elements may be added to the electronic device 801. In some embodiments, some elements (e.g., the sensor module 876, the camera module 880, or the antenna module 897) may be integrated into one element (e.g., the display module 860).

The processor 820 may execute software (e.g., a program 840, etc.) to control one or more other elements (e.g., hardware or software elements, etc.) of the electronic device 801 connected to the processor 820, and may perform various data processing or operations. According to an embodiment, as at least part of data processing or operations, the processor 820 may store, in a volatile memory 832, commands or data received from other elements (e.g., the sensor module 876 or the communication module 890), may process the commands or data stored in the volatile memory 832, and may store result data in a non-volatile memory 834. According to one embodiment, the processor 820 may include a main processor 821 (e.g., a central processing unit or an application processor) or an auxiliary processor 823 (e.g., a graphics processing unit, a neural processing unit (NPU), an image signal processor, a sensor hub processor, or a communication processor) that is operable independently of or in conjunction with the main processor 821. For example, when the electronic device 801 includes the main processor 821 and the auxiliary processor 823, the auxiliary processor 823 may use less power than the main processor 821 or may be set to be specialized for a designated function. The auxiliary processor 823 may be implemented separately from the main processor 821 or may be implemented as part of the main processor 821.

For example, the auxiliary processor 823 may control at least some of the functions or states related to at least one of the elements of the electronic device 801 (e.g., the display module 860, the sensor module 876, or the communication module 890) on behalf of the main processor 821 while the main processor 821 is in an inactive state (e.g., a sleep state) or together with the main processor 821 while the main processor 821 is in an active state (e.g., an application execution state). According to an embodiment, the auxiliary processor 823 (e.g., the image signal processor or the communication processor) may be implemented as part of other functionally related elements (e.g., the camera module 880 or the communication module 890). According to an embodiment, the auxiliary processor 823 (e.g., the NPU) may include a hardware structure specialized for processing an artificial intelligence model. The artificial intelligence model may be generated through machine learning. For example, such learning may be performed in the electronic device 801 itself in which the artificial intelligence model is executed, or may be performed through a separate server (e.g., the server 808). A learning algorithm may include, for example, supervised learning, unsupervised learning, semi-supervised learning, or reinforcement learning, but the present disclosure is not limited to the above example. The artificial intelligence model may include a plurality of artificial neural network layers. The artificial intelligence model may be a deep neural network (DNN), a convolutional neural network (CNN), a recurrent neural network (RNN), a restricted Boltzmann machine (RBM), a deep belief network (DBN), a bidirectional recurrent deep neural network (BRDNN), a deep Q-network, or a combination of two or more thereof, but the present disclosure is not limited to the above example. The artificial intelligence model may additionally or alternatively include a software structure in addition to the hardware structure.

The memory 830 may store a variety of data used by at least one element (e.g., the processor 820 or the sensor module 876) of the electronic device 801. The data may include, for example, the software (e.g., the program 840) and input data or output data for commands related thereto. The memory 830 may include the volatile memory 832 or the non-volatile memory 834.

The program 840 may be stored in the memory 830 as software and may include, for example, an operating system 842, a middleware 844, or an application 846.

The input module 850 may receive, from the outside of the electronic device 801 (e.g., the user), commands or data to be used by the elements (e.g., the processor 820) of the electronic device 801. The input module 850 may include, for example, a microphone, a mouse, a keyboard, a key (e.g., a button), or a digital pen (e.g., a stylus pen).

The sound output module 855 may output a sound signal to the outside of the electronic device 801. The sound output module 855 may include, for example, a speaker or a receiver. The speaker may be used for general purposes, such as multimedia reproduction or recording reproduction. The receiver may be used to receive an incoming call. According to an embodiment, the receiver may be implemented separately from the speaker or may be implemented as part of the speaker.

The display module 860 may visually provide information to the outside of the electronic device 801 (e.g., the user). The display module 860 may include, for example, a display, a hologram device, a projector, and a control circuit configured to control the corresponding device. According to an embodiment, the display module 860 may include a touch sensor configured to detect a touch or a pressure sensor configured to measure the intensity of force generated by the touch.

The audio module 870 may convert a sound into an electrical signal or vice versa. According to an embodiment, the audio module 870 may obtain a sound through the input module 850, or may output a sound through the sound output module 855, or a speaker or a headphone of an external electronic device (e.g., the electronic device 802) directly or wirelessly connected to the electronic device 801.

The sensor module 876 may sense an operating state (e.g., power or temperature) of the electronic device 801 or an external environmental state (e.g., a user condition), and may generate an electrical signal or a data value corresponding to the sensed state. According to an embodiment, the sensor module 876 may include, for example, a gesture sensor, a gyro sensor, an air pressure sensor, a magnetic sensor, an acceleration sensor, a grip sensor, a proximity sensor, a color sensor, an infrared (IR) sensor, a biometric sensor, a temperature sensor, a humidity sensor, or an illumination sensor.

The interface 877 may support one or more designated protocols that may be used by the electronic device 801 so as to directly or wirelessly connect to the external electronic device (e.g., the electronic device 802). According to an embodiment, the interface 877 may include, for example, a high definition multimedia interface (HDMI), a universal serial bus (USB) interface, a secure digital (SD) card interface, or an audio interface.

The connection terminal 878 may include a connector through which the electronic device 801 may be physically connected to the external electronic device (e.g., the electronic device 802). According to an embodiment, the connection terminal 878 may include an HDMI connector, a USB connector, an SD card connector, or an audio connector (e.g., a headphone connector).

The haptic module 879 may convert an electrical signal into a mechanical stimulus (e.g., vibration or movement) or an electrical stimulus which a user may recognize through a tactile or kinesthetic sense. According to an embodiment, the haptic module 879 may include, for example, a motor, a piezoelectric element, or an electrical stimulator.

The camera module 880 may capture a still image and a moving image. According to an embodiment, the camera module 880 may include one or more lenses, image sensors, image signal processors, or flashes.

The power management module 888 may manage power to be supplied to the electronic device 801. According to an embodiment, the power management module 888 may be implemented as part of a power management integrated circuit (PMIC).

The battery 889 may supply power to at least one element of the electronic device 801. According to an embodiment, the battery 889 may include, for example, a non-rechargeable primary cell, a rechargeable secondary cell, or a fuel cell.

The communication module 890 may establish a direct (e.g., wired) communication channel or a wireless communication channel between the electronic device 801 and the external electronic device (e.g., the electronic device 802, the electronic device 804, or the server 808), and may support communication through the established communication channel. The communication module 890 may include one or more communication processors that operate independently of the processor 820 (e.g., the application processor) and support direct(e.g., wired) communication or wireless communication. The communication module 890 may be the electronic device 100.

According to an embodiment, the communication module 890 may include a wireless communication module 892 (e.g., a cellular communication module, a short-range wireless communication module, or a global navigation satellite system (GNSS) communication module) or a wired communication module 894 (e.g., a local area network (LAN) communication module or a power line communication module). The corresponding communication module among these communication modules may communicate with the external electronic device 804 via the first network 898 (e.g., a short-range communication network such as Bluetooth, Wi-Fi direct, or Infrared data association (IrDA)) or the second network 899 (e.g., a long-range communication network such as a legacy cellular network, a 5th generation (5G) network, a next-generation communication network, Internet, or a computer network (e.g., LAN or wide area network (WAN)). These various types of communication modules may be integrated into one element (e.g., a single chip) or may be implemented as a plurality of elements (e.g., a plurality of chips) separate from each other. The wireless communication module 892 may identify or authenticate the electronic device 801 within the communication network, such as the first network 898 or the second network 899, by using subscriber information (e.g., international mobile subscriber identity (IMSI)) stored in the subscriber identity module 896.

The wireless communication module 892 may support a 5G network after a 4th generation (4G) network and a next-generation communication technology, for example, a new radio (NR) access technology. The NR access technology may support enhanced mobile broadband (eMBB), massive machine type communications (mMTC), or ultra-reliable and low-latency communications (URLLC). The wireless communication module 892 may support, for example, a high frequency band (e.g., mmWave band) in order to achieve a high throughput. The wireless communication module 892 may support various technologies for securing performance in a high frequency band, for example, beamforming, massive multiple-input and multiple-output (MIMO), full dimensional MIMO (FD-MIMO), array antenna, analog beamforming, or large scale antenna. The wireless communication module 892 may support various requirements defined for the electronic device 801, the external electronic device (e.g., the electronic device 804), or the network system (e.g., the second network 899). According to an embodiment, the wireless communication module 892 may support a peak data rate for eMBB realization (e.g., 20 Gbps or more), a loss coverage for mMTC realization (e.g., 164 dB or less), or U-plane latency for URLLC realization (e.g., downlink (DL) and uplink (UL) each less than 0.5 ms or round trip less than 1 ms).

The antenna module 897 may transmit a signal and/or power to the outside (e.g., the electronic device) or receive a signal and/or power from the outside (e.g., the electronic device). According to an embodiment, the antenna module 897 may include an antenna including a radiator made of a conductor or a conductive pattern on a substrate (e.g., a printed circuit board (PCB)). According to an embodiment, the antenna module 897 may include a plurality of antennas (e.g., an array antenna). In this case, at least one antenna suitable for the communication scheme used in the communication network, such as the first network 898 or the second network 899 may be selected from among the antennas by the communication module 890. The signal or power may be transmitted or received between the communication module 890 and the external electronic device through the selected at least one antenna. According to some embodiments, in addition to the radiator, other elements (e.g., a radio frequency integrated circuit (RFIC)) may be additionally formed as part of the antenna module 897.

According to various embodiments, the antenna module 897 may form a mmWave antenna module. According to an embodiment, the mmWave antenna module may include a PCB, an RFIC disposed on or adjacent to a first surface (e.g., a bottom surface) of the PCB and capable of supporting a designated high frequency band (e.g., mmWave band), and a plurality of antennas (e.g., an array antenna) disposed on or adjacent to a second surface (e.g., a top surface or a side surface) of the PCB and capable of transmitting or receiving a signal of the designated high frequency band.

At least some elements may be connected to each other through a communication scheme between peripheral devices (e.g., a bus, a general purpose input and output (GPIO), a serial peripheral interface (SPI), or a mobile industry processor interface (MIPI)), and may exchange a signal (e.g., a command or data) with each other.

According to an embodiment, the command or data may be transmitted or received between the electronic device 801 and the external electronic device 804 through the server 808 connected to the second network 899. The type of the external electronic device 802 or 804 may be identical to or different from the type of the electronic device 801. According to an embodiment, all or part of the operations that are performed by the electronic device 801 may be performed by one or more of the external electronic devices 802, 804, and 808. For example, when the electronic device 801 has to execute a certain function or service automatically or in response to a request from a user or other devices, the electronic device 801 may request one or more external electronic devices to execute at least part of the function or service instead of or in addition to executing the function or service by itself. The one or more external electronic devices receiving the request may execute at least part of the requested function or service or an additional function or service related to the request, and may transmit a result of the executing to the electronic device 801. The electronic device 801 may provide the result as it is or may provide the result as at least part of a response to the request by additionally processing the result. To this end, for example, cloud computing, distributed computing, mobile edge computing (MEC), or client-server computing technology may be used. The electronic device 801 may provide an ultra-low latency service by using, for example, distributed computing or mobile edge computing. In another embodiment, the external electronic device 804 may include an internet of things (IoT) device. The server 808 may be an intelligent server using machine learning and/or neural networks. According to an embodiment, the external electronic device 804 or the server 808 may be included in the second network 899. The electronic device 801 may be applied to intelligent services (e.g., smart home, smart city, smart car, or health care) based on 5G communication technology and loT-related technology.

The electronic devices according to various embodiments disclosed in the present disclosure may be various types of devices. The electronic devices may include, for example, portable communication devices (e.g., a smartphone), computer devices, portable multimedia devices, portable medical devices, cameras, wearable devices, or home appliances. The electronic device according to an embodiment of the present disclosure is not limited to the devices described above.

Various embodiments of the present disclosure and terms as used therein are not intended to limit the technical features described in the present disclosure to specific embodiments, but should be understood as including various modifications, equivalents, or substitutes of the embodiments. In connection with the description of the drawings, like reference numbers may be used to denote like or related elements. A singular form of a noun corresponding to an item may include one item or more items, unless the relevant context clearly indicates otherwise. In the present disclosure, the expressions "A or B," "at least one of A and B," "at least one of A or B," "A, B, or C," "at least one of A, B, and C," and "at least one of A, B, or C" may include any one of the items listed in the corresponding expression or all possible combinations thereof. The terms "first," "second," etc. as used herein may be only used to distinguish one element from another and do not limit the elements in any other aspects (e.g., importance or order). When a certain (e.g., first) element is referred to as being "coupled" or "connected" to another (e.g., second) element with or without the terms "functionally" or "communicatively," it means that the certain element may be coupled or connected to the other element directly (e.g., by wire) or wirelessly or through a third element.

The term "module" as used in various embodiments of the present disclosure may include a unit implemented in hardware, software, or firmware and may be used interchangeably with, for example, "logics," "logic blocks," "components," or "circuits." The module may be an integrally constructed component or a minimal unit of the component or a portion thereof that performs one or more functions. For example, according to an embodiment, the module may be implemented in the form of an application-specific integrated circuit (ASIC).

Various embodiments of the present disclosure may be implemented as software (e.g., the program 840) including one or more instructions stored in a storage medium (e.g., an internal memory 836 or an external memory 838) readable by a machine (e.g., the electronic device 801). For example, a processor (e.g., the processor 820) of the machine (e.g., the electronic device 801) may call at least one command among the one or more instructions stored from the storage medium and execute the called at least one command. This enables the device to operate to execute at least one function according to the called at least one instruction. The one or more instructions may include code generated by a compiler or code executable by an interpreter. The storage medium that is readable by the machine may be provided in the form of a non-transitory storage medium. The non-transitory storage medium is a tangible device and only means not including a signal (e.g., electromagnetic waves). This term does not distinguish between a case where data is semi-permanently stored in a storage medium and a case where data is temporarily stored in a storage medium.

According to an embodiment, the methods according to various embodiments disclosed in the present disclosure may be provided by being included in a computer program product. The computer program products may be traded between a seller and a buyer as commodities. The computer program product may be distributed in the form of a machine-readable storage medium (e.g., compact disc read only memory (CD-ROM)), or may be distributed (e.g., downloaded or uploaded) online, either via an application store (e.g., Play Store^{™}) or directly between two user devices (e.g., smartphones). In the case of the online distribution, at least part of the computer program product may be stored at least temporarily on a machine-readable storage medium, such as a server of a manufacturer, a server of an application store, or a memory of a relay server, or may be temporarily generated.

According to various embodiments, the respective elements (e.g., the modules or the programs) described above may include one or more entities, and some entities may be separately disposed in other elements. According to various embodiments, one or more operations or elements among the above-described elements may be omitted, or one or more other operations or elements may be added. Alternatively or additionally, a plurality of elements (e.g., the modules or the programs) may be integrated into a single element. In this case, the integrated element may execute one or more functions of each of the elements identically or similarly to those executed by the corresponding element among the elements prior to the integration. According to various embodiments, operations performed by modules, programs, or other elements may be performed sequentially, in parallel, iteratively, or heuristically, one or more of the operations may be performed in a different order or may be omitted, or one or more other operations may be added.

So far, the present disclosure has been described in detail, focusing on preferred embodiments illustrated in the drawings. These embodiments are merely illustrative rather than restrictive, and should be considered in an illustrative aspect rather than a restrictive aspect. It will be understood by those of ordinary skill in the art to which the present disclosure pertains that these embodiments may be easily modified into specific forms, without changing the technical spirit or essential features of the present disclosure. For example, the elements described as being singular may be implemented in a distributed manner. Similarly, the elements described as being distributed may be implemented in a combined form. Although specific terms are used in the present specification, the specific terms are only used for the purpose of explaining the concept of the present disclosure and are not used to limit the scope of the present disclosure described in the claims.

## Claims

1. An electronic device (100, 801, 804) for communicating with an access point, AP, based on a target wake time, TWT, of the Institute of Electrical and Electronics Engineers, IEEE, 802.11 standard, the electronic device (100, 801, 804) comprising:
a processor (820); and
a memory (830) configured to store instructions,
wherein the processor (820) is configured to execute the instructions to:
determine a first TWT schedule by performing TWT negotiation with a first AP (110);
determine a second TWT schedule by performing TWT negotiation with a second AP (120);
communicate with the second AP (120) based on the second TWT schedule while communicating with the first AP (110) based on the first TWT schedule; and **characterized by**
in a state of being single-connected to the first AP (110), attempt multi-connection when a received signal strength indication for the first AP (110) is low according to a specified criterion.

2. The electronic device (100, 801, 804) of claim 1, wherein the processor (820) is further configured to perform the TWT negotiation with the second AP (120) based on the first TWT schedule.

3. The electronic device (100, 801, 804) of claim 2, wherein the processor (820) is further configured to determine the second TWT schedule so that a service period according to the first TWT schedule does not overlap a service period according to the second TWT schedule.

4. The electronic device (100, 801, 804) of claim 1, wherein the processor (820) is further configured to be connected to the second AP (120) while maintaining a state of being connected to the first AP (110).

5. The electronic device of claim 1, wherein the processor is further configured to, in a state of being single-connected to the first AP, when an AP is found in which a received signal strength indication for the first AP is low according to a first specified criterion and is high according to a second specified criterion, switch to a multi-connected state by connecting to the found AP.

6. The electronic device (100, 801, 804) of claim 1, wherein the processor (820) is further configured to, in a state of being multi-connected to a plurality of APs, when received signal strength indication for any one of the plurality of multi-connected APs is high according to a specified criterion, switch to a state of being single-connected to the corresponding AP.

7. The electronic device (100, 801, 804) of claim 1, wherein the processor (820) is further configured to, in a state of being multi-connected to a plurality of APs, when received signal strength indication for any one of the plurality of multi-connected APs is low according to a specified criterion, release the connection to the corresponding AP.

8. The electronic device (100, 801, 804) of claim 1, wherein the processor (820) is further configured to:
when performing communication based on the first TWT schedule, perform operations of a medium access control, MAC, layer and a physical layer according to the first AP (110); and
when performing communication based on the second TWT schedule, perform the operations of the MAC layer and the physical layer according to the second AP (120).

9. The electronic device (100, 801, 804) of claim 8, wherein, when the processor (820) performs the communication based on the first TWT schedule, an operation of an upper layer is performed in a same manner as when the processor (820) performs the communication based on the second TWT schedule.

10. The electronic device (100, 801, 804) of claim 9, wherein the processor (820) is further configured to: after the processor (820) is connected to the second AP (120) in a state of being connected to the first AP (110),
transmit an address resolution protocol, ARP, request to the second AP (120) by using an IP address of a gateway of the first AP (110);
determine whether a MAC address of a response to the ARP request is identical to a MAC address of the gateway; and
release the connection to the second AP (120) when the MAC address of the response is different from the MAC address of the gateway.

11. The electronic device (100, 801, 804) of claim 1, wherein the processor (820) is further configured to adjust at least one of the first TWT schedule and the second TWT schedule by performing TWT negotiation with at least one of the first AP (110) and the second AP (120), based on a channel state for the first AP (110) and a channel state for the second AP (120).

12. The electronic device (100, 801, 804) of claim 11, wherein the processor (820) is further configured to perform adjustment so that a wake duration of an AP having a better channel state among the first AP (110) and the second AP (120) is longer than a wake duration of an AP having a worse channel state among the first AP (110) and the second AP (120).

13. The electronic device (100, 801, 804) of claim 1, wherein the processor (820) is further configured to display, on a screen, a connection state (710, 720) with the first AP (110) and a connection state (710, 720) with the second AP (120).

14. An operating method of an electronic device (100, 801, 804) for communicating with an access point, AP, based on a target wake time, TWT, of the Institute of Electrical and Electronics Engineers, IEEE, 802.11 standard, the operating method comprising:
determining a first TWT schedule by performing TWT negotiation with a first AP (110);
determining a second TWT schedule by performing TWT negotiation with a second AP (120);
communicating with the second AP (120) based on the second TWT schedule while communicating with the first AP (110) based on the first TWT schedule; and **characterized by**
in a state of being single-connected to the first AP (110), attempt multi-connection when a received signal strength indication for the first AP (110) is low according to a specified criterion.

## Patentansprüche

1. Elektronische Vorrichtung (100, 801, 804) zur Kommunikation mit einem Zugangspunkt, AP, auf Basis einer Zielweckzeit, TWT, des Institute of Electrical and Electronics Engineers, IEEE, 802.11-Standards, wobei die elektronische Vorrichtung (100, 801, 804) Folgendes umfasst:
einen Prozessor (820); und
einen Speicher (830), der zum Speichern von Befehlen konfiguriert ist,
wobei der Prozessor (820) dazu konfiguriert ist, die Befehle auszuführen, um:
einen ersten TWT-Zeitplan durch Durchführen einer TWT-Aushandlung mit einem ersten AP (110) zu bestimmen;
einen zweiten TWT-Zeitplan durch Durchführen einer TWT-Aushandlung mit einem zweiten AP (120) zu bestimmen;
mit dem zweiten AP (120) auf der Grundlage des zweiten TWT-Zeitplans während einer Kommunikation mit dem ersten AP (110) auf der Grundlage des ersten TWT-Zeitplans zu kommunizieren; und **gekennzeichnet durch**
in einem Zustand, in dem eine Einzelverbindung zum ersten AP (110) besteht, eine Mehrfachverbindung zu versuchen, wenn eine empfangene Signalstärkenangabe für den ersten AP (110) gemäß einem festgelegten Kriterium niedrig ist.

2. Elektronische Vorrichtung (100, 801, 804) nach Anspruch 1, wobei der Prozessor (820) ferner dazu konfiguriert ist, die TWT-Aushandlung mit dem zweiten AP (120) auf der Grundlage des ersten TWT-Zeitplans durchzuführen.

3. Elektronische Vorrichtung (100, 801, 804) nach Anspruch 2, wobei der Prozessor (820) ferner dazu konfiguriert ist, den zweiten TWT-Zeitplan so zu bestimmen, dass sich eine Dienstperiode gemäß dem ersten TWT-Zeitplan nicht mit einer Dienstperiode gemäß dem zweiten TWT-Zeitplan überschneidet.

4. Elektronische Vorrichtung (100, 801, 804) nach Anspruch 1, wobei der Prozessor (820) ferner so konfiguriert ist, dass er mit dem zweiten AP (120) verbunden wird, während er einen Verbindungszustand mit dem ersten AP (110) aufrechterhält.

5. Elektronische Vorrichtung nach Anspruch 1, wobei der Prozessor ferner dazu konfiguriert ist, in einem Zustand, in dem eine Einzelverbindung zum ersten AP besteht, bei Erkennung eines AP, bei dem eine empfangene Signalstärkenangabe für den ersten AP gemäß einem ersten festgelegten Kriterium niedrig und gemäß einem zweiten festgelegten Kriterium hoch ist, durch Herstellen einer Verbindung zu dem erkannten AP in einen Zustand mit Mehrfachverbindung zu wechseln.

6. Elektronische Vorrichtung (100, 801, 804) nach Anspruch 1, wobei der Prozessor (820) ferner dazu konfiguriert ist, in einem Zustand, in dem eine Mehrfachverbindung zu mehreren APs besteht, in einen Zustand zu wechseln, in dem eine Einzelverbindung zu dem entsprechenden AP besteht, wenn die empfangene Signalstärkenangabe für einen beliebigen der mehreren APs, mit denen eine Mehrfachverbindung besteht, gemäß einem festgelegten Kriterium hoch ist.

7. Elektronische Vorrichtung (100, 801, 804) nach Anspruch 1, wobei der Prozessor (820) ferner dazu konfiguriert ist, in einem Zustand, in dem eine Mehrfachverbindung zu mehreren APs besteht, die Verbindung zu dem entsprechenden AP zu trennen, wenn die empfangene Signalstärkenangabe für einen beliebigen der mehreren APs, mit denen eine Mehrfachverbindung besteht, gemäß einem festgelegten Kriterium niedrig ist.

8. Elektronische Vorrichtung (100, 801, 804) nach Anspruch 1, wobei der Prozessor (820) ferner dazu konfiguriert ist:
bei der Durchführung der Kommunikation auf der Grundlage des ersten TWT-Zeitplans Operationen einer Medium Access Control-, MAC, -Schicht und einer physikalischen Schicht entsprechend dem ersten AP (110) durchzuführen; und
bei der Durchführung der Kommunikation auf der Grundlage des zweiten TWT-Zeitplans die Operationen der MAC-Schicht und der physikalischen Schicht entsprechend dem zweiten AP (120) durchzuführen.

9. Elektronische Vorrichtung (100, 801, 804) nach Anspruch 8, wobei, wenn der Prozessor (820) die Kommunikation auf der Grundlage des ersten TWT-Zeitplans durchführt, eine Operation einer oberen Schicht auf dieselbe Weise durchgeführt wird wie bei der Durchführung der Kommunikation durch den Prozessor (820) auf der Grundlage des zweiten TWT-Zeitplans.

10. Elektronische Vorrichtung (100, 801, 804) nach Anspruch 9, wobei der Prozessor (820) ferner dazu konfiguriert ist: nachdem der Prozessor (820) in einem Zustand, in dem er mit dem ersten AP (110) verbunden ist, mit dem zweiten AP (120) verbunden wurde,
eine Address Resolution Protocol-, ARP, -Anfrage unter Verwendung einer IP-Adresse eines Gateways des ersten AP (110) an den zweiten AP (120) zu senden;
festzustellen, ob eine MAC-Adresse einer Antwort auf die ARP-Anfrage identisch mit einer MAC-Adresse des Gateways ist; und
die Verbindung zum zweiten AP (120) zu trennen, wenn sich die MAC-Adresse der Antwort von der MAC-Adresse des Gateways unterscheidet.

11. Elektronische Vorrichtung (100, 801, 804) nach Anspruch 1, wobei der Prozessor (820) ferner dazu konfiguriert ist, mindestens einen von dem ersten TWT-Zeitplan und dem zweiten TWT-Zeitplan durch Durchführen einer TWT-Aushandlung mit mindestens einem von dem ersten AP (110) und dem zweiten AP (120) basierend auf einem Kanalzustand für den ersten AP (110) und einem Kanalzustand für den zweiten AP (120) anzupassen.

12. Elektronische Vorrichtung (100, 801, 804) nach Anspruch 11, wobei der Prozessor (820) ferner dazu konfiguriert ist, eine Anpassung so durchzuführen, dass eine Wake-Dauer eines AP, der unter dem ersten AP (110) und dem zweiten AP (120) einen besseren Kanalzustand aufweist, länger ist als eine Wake-Dauer eines AP, der unter dem ersten AP (110) und dem zweiten AP (120) einen schlechteren Kanalzustand aufweist.

13. Elektronische Vorrichtung (100, 801, 804) nach Anspruch 1, wobei der Prozessor (820) ferner dazu konfiguriert ist, auf einem Bildschirm einen Verbindungszustand (710, 720) mit dem ersten AP (110) und einen Verbindungszustand (710, 720) mit dem zweiten AP (120) anzuzeigen.

14. Betriebsverfahren einer elektronischen Vorrichtung (100, 801, 804) zur Kommunikation mit einem Zugangspunkt, AP, auf Basis einer Zielweckzeit, TWT, des Institute of Electrical and Electronics Engineers, IEEE, 802.11-Standards, wobei das Betriebsverfahren Folgendes umfasst:
Bestimmen eines ersten TWT-Zeitplans durch Durchführen einer TWT-Aushandlung mit einem ersten AP (110);
Bestimmen eines zweiten TWT-Zeitplans durch Durchführen einer TWT-Aushandlung mit einem zweiten AP (120);
Kommunizieren mit dem zweiten AP (120) auf der Grundlage des zweiten TWT-Zeitplans während einer Kommunikation mit dem ersten AP (110) auf der Grundlage des ersten TWT-Zeitplans; und **gekennzeichnet durch**
in einem Zustand, in dem eine Einzelverbindung zum ersten AP (110) besteht, eine Mehrfachverbindung zu versuchen, wenn eine empfangene Signalstärkenangabe für den ersten AP (110) gemäß einem festgelegten Kriterium niedrig ist.

## Revendications

1. Dispositif électronique (100, 801, 804) destiné à communiquer avec un point d'accès, AP, sur la base d'un temps de réveil cible, TWT, de la norme 802.11 de l'Institute of Electrical and Electronics Engineers, IEEE, le dispositif électronique (100, 801, 804) comprenant :
un processeur (820) ; et
une mémoire (830) configurée pour stocker des instructions,
dans lequel le processeur (820) est configuré pour exécuter les instructions pour :
déterminer un premier programme TWT en effectuant une négociation TWT avec un premier AP (110) ;
déterminer un deuxième programme TWT en effectuant une négociation TWT avec un deuxième AP (120) ;
communiquer avec le deuxième AP (120) sur la base du deuxième programme TWT tout en communiquant avec le premier AP (110) sur la base du premier programme TWT ; et **caractérisé par**
dans un état de liaison unique au premier AP (110), tenter une multi-liaison lorsqu'une indication de puissance de signal reçu pour le premier AP (110) est faible selon un critère spécifié.

2. Dispositif électronique (100, 801, 804) selon la revendication 1, dans lequel le processeur (820) est en outre configuré pour effectuer la négociation TWT avec le deuxième AP (120) sur la base du premier programme TWT.

3. Dispositif électronique (100, 801, 804) selon la revendication 2, dans lequel le processeur (820) est en outre configuré pour déterminer le deuxième programme TWT de sorte qu'une période de service selon le premier programme TWT ne chevauche pas une période de service selon le deuxième programme TWT.

4. Dispositif électronique (100, 801, 804) selon la revendication 1, dans lequel le processeur (820) est en outre configuré pour être en liaison avec le deuxième AP (120) tout en maintenant un état de liaison avec le premier AP (110).

5. Dispositif électronique selon la revendication 1, dans lequel le processeur est en outre configuré pour, dans un état de liaison unique au premier AP, lorsqu'un AP est trouvé pour lequel une indication de puissance de signal reçu pour le premier AP est faible selon un premier critère spécifié et est élevée selon un deuxième critère spécifié, passer à un état de multi-liaison en se mettant en liaison avec l'AP trouvé.

6. Dispositif électronique (100, 801, 804) selon la revendication 1, dans lequel le processeur (820) est en outre configuré pour, dans un état de multi-liaison avec une pluralité d'AP, lorsque l'indication de puissance de signal reçu pour l'un quelconque de la pluralité d'AP en multi-liaison est élevée selon un critère spécifié, passer à un état de liaison unique à l'AP correspondant.

7. Dispositif électronique (100, 801, 804) selon la revendication 1, dans lequel le processeur (820) est en outre configuré pour, dans un état de multi-liaison avec une pluralité d'AP, lorsque l'indication de puissance de signal reçu pour l'un quelconque de la pluralité d'AP en multi-liaison est faible selon un critère spécifié, libérer la liaison avec l'AP correspondant.

8. Dispositif électronique (100, 801, 804) selon la revendication 1, dans lequel le processeur (820) est en outre configuré pour :
lors de l'exécution d'une communication sur la base du premier programme TWT, effectuer des opérations d'une couche de contrôle d'accès au support, MAC, et d'une couche physique selon le premier AP (110) ; et
lors de l'exécution d'une communication sur la base du deuxième programme TWT, effectuer les opérations de la couche MAC et de la couche physique selon le deuxième AP (120).

9. Dispositif électronique (100, 801, 804) selon la revendication 8, dans lequel, lorsque le processeur (820) effectue la communication sur la base du premier programme TWT, une opération d'une couche supérieure est effectuée de la même manière que lorsque le processeur (820) effectue la communication sur la base du deuxième programme TWT.

10. Dispositif électronique (100, 801, 804) selon la revendication 9, dans lequel le processeur (820) est en outre configuré pour : après que le processeur (820) est en liaison avec le deuxième AP (120) dans un état de liaison avec le premier AP (110),
transmettre une requête de protocole de résolution d'adresse, ARP, au deuxième AP (120) en utilisant une adresse IP d'une passerelle du premier AP (110) ;
déterminer si une adresse MAC d'une réponse à la requête ARP est identique à une adresse MAC de la passerelle ; et
libérer la liaison avec le deuxième AP (120) lorsque l'adresse MAC de la réponse est différente de l'adresse MAC de la passerelle.

11. Dispositif électronique (100, 801, 804) selon la revendication 1, dans lequel le processeur (820) est en outre configuré pour ajuster au moins l'un du premier programme TWT et du deuxième programme TWT en effectuant une négociation TWT avec au moins l'un du premier AP (110) et du deuxième AP (120), sur la base d'un état de canal pour le premier AP (110) et d'un état de canal pour le deuxième AP (120).

12. Dispositif électronique (100, 801, 804) selon la revendication 11, dans lequel le processeur (820) est en outre configuré pour effectuer un ajustement de sorte qu'une durée de réveil d'un AP ayant un meilleur état de canal parmi le premier AP (110) et le deuxième AP (120) soit plus longue qu'une durée de réveil d'un AP ayant un canal dégradé parmi le premier AP (110) et le deuxième AP (120).

13. Dispositif électronique (100, 801, 804) selon la revendication 1, dans lequel le processeur (820) est en outre configuré pour afficher, sur un écran, un état de liaison (710, 720) avec le premier AP (110) et un état de liaison (710, 720) avec le deuxième AP (120).

14. Procédé de fonctionnement d'un dispositif électronique (100, 801, 804) destiné à communiquer avec un point d'accès, AP, sur la base d'un temps de réveil cible, TWT, de la norme 802.11 de l'Institute of Electrical and Electronics Engineers, IEEE, le procédé de fonctionnement comprenant :
déterminer un premier programme TWT en effectuant une négociation TWT avec un premier AP (110) ;
déterminer un deuxième programme TWT en effectuant une négociation TWT avec un deuxième AP (120) ;
communiquer avec le deuxième AP (120) sur la base du deuxième programme TWT tout en communiquant avec le premier AP (110) sur la base du premier programme TWT ; et **caractérisé par**
dans un état de liaison unique au premier AP (110), tenter une multi-liaison lorsqu'une indication de puissance de signal reçu pour le premier AP (110) est faible selon un critère spécifié.
